Europäisches Patentamt

European Patent Office

Office européen des brevets

(19)

(11) Veröffentlichungsnummer: **0 205 058**
A2

(12) # EUROPÄISCHE PATENTANMELDUNG

(21) Anmeldenummer: 86107396.3

(22) Anmeldetag: 31.05.86

(51) Int. Cl.⁴: **H 04 N 5/225**

Ein Antrag gemäss Regel 88 EPÜ auf Berichtigung des Anspruchs 10 liegt vor. über diesen Antrag wird im haufe des verfahrens von der Prüfungsabteilung eine Entscheidung getroffen werden.

(30) Priorität: 07.06.85 DE 3520459

(43) Veröffentlichungstag der Anmeldung:
17.12.86 Patentblatt 86/51

(84) Benannte Vertragsstaaten:
AT BE CH DE FR GB IT LI LU NL SE

(71) Anmelder: Deutsche AG für Unterhaltungselectronic OHG
Postfach 13 63
D-7730 Villingen - Schwenningen(DE)

(72) Erfinder: Erxleben, Tomas, Dipl.-Designer
Im Bergfeld 31
D-3005 Hemmingen(DE)

(74) Vertreter: Einsel, Robert, Dipl.-Ing.
Deutsche AG für Unterhaltungselectronic OHG Patent und Lizenzabteilung Göttinger Chaussee 76
D-3000 Hannover 91(DE)

(54) Videokamera.

(57) Eine Videokamera ist mit einem in Längsrichtung verschiebbaren Teil (5) versehen, das in der vorderen Endstellung einen Schutz für das Objektiv (4) bildet und in der hinteren Endstellung das Objektiv freigibt. In der hinteren Endstellung ist zusätzlich das Okular (9) des Suchers auf maximale Vergrößerung ausgefahren.

Fig.1

H-85/48    0205058

## Videokamera

Die Erfindung betrifft eine Videokamera, wie sie insbesondere
im Zusammenhang mit Videorecordern bei Eigenaufnahmen verwendet wird.

Derartige Videokameras sind verhältnismäßig teure und empfindliche Geräte und müssen daher bei der Handhabung und beim Transport sorgfältig behandelt und geschützt werden. Hierzu ist es
bekannt, derartige Kameras in Spezialtaschen aufzubewahren und
zu transportieren.

Der Erfindung liegt die Aufgabe zugrunde, eine Videokamera
konstruktiv so auszubilden, daß sie weitestgehend geschützt
ist und besonders einfach in den Betriebszustand gebracht
werden kann.

Diese Aufgabe wird durch die im Anspruch 1 beschriebene Erfindung gelöst. Vorteilhafte Weiterbildungen der Erfindung sind
in den Unteransprüchen beschrieben.

Bei der erfindungsgemäßen Lösung wird der angestrebte Schutz
der Videokamera also nicht durch eine Tragetasche erreicht,
sondern durch eine vorteilhafte konstruktive Ausbildung des Gehäuses. Das verschiebbare Teil, das Bestandteil des Kameragehäuses ist, erfüllt dabei mehrere Funktionen. In der vorderen
Endstellung bietet es einen wirksamen Schutz für das Objektiv,
in dem z.B. durch einen Ausleger an dem verschiebbaren Teil
das Objektiv an der Vorderseite abgedeckt ist. In der hinteren
Endstellung wird indessen das Objektiv freigegeben. Zusätzlich
wird gemäß einer Ausführungsform der Erfindung ein an dem verschiebbaren Teil befindliches Okular für den Sucher zurückgefahren, derart, daß der Sucher auf maximale Vergrößerung eingestellt ist. Durch die Bewegung des verschiebbaren Teils in
die hintere Endstellung kann zusätzlich ein an der Vorderseite
des Gehäuses angeordnetes Mikrofon nach vorne ausgefahren werden. Das verschiebbare Teil ist vorzugsweise als oberes Gehäuseteil ausgebildet. Gemäß einer anderen Ausführungsform umgibt das verschiebbare Teil hülsenartig das gesamte Kameragehäuse.

Die Erfindung wird in folgenden anhand der Zeichnung an zwei
Ausführungsbeispielen erläutert. Darin zeigen

Fig. 1 eine Kamera mit dem verschiebbaren Teil in der vorderen Endstellung,

Fig. 2 dieselbe Kamera mit dem verschiebbaren Teil in der hinteren Endstellung.

Fig. 3 eine andere Ausführungsform mit dem verschiebbaren
        Teil in der vorderen Endstellung und

Fig. 4 die Kamera gemäß Fig. 3 mit dem verschiebbaren Teil in
        der hinteren Endstellung.

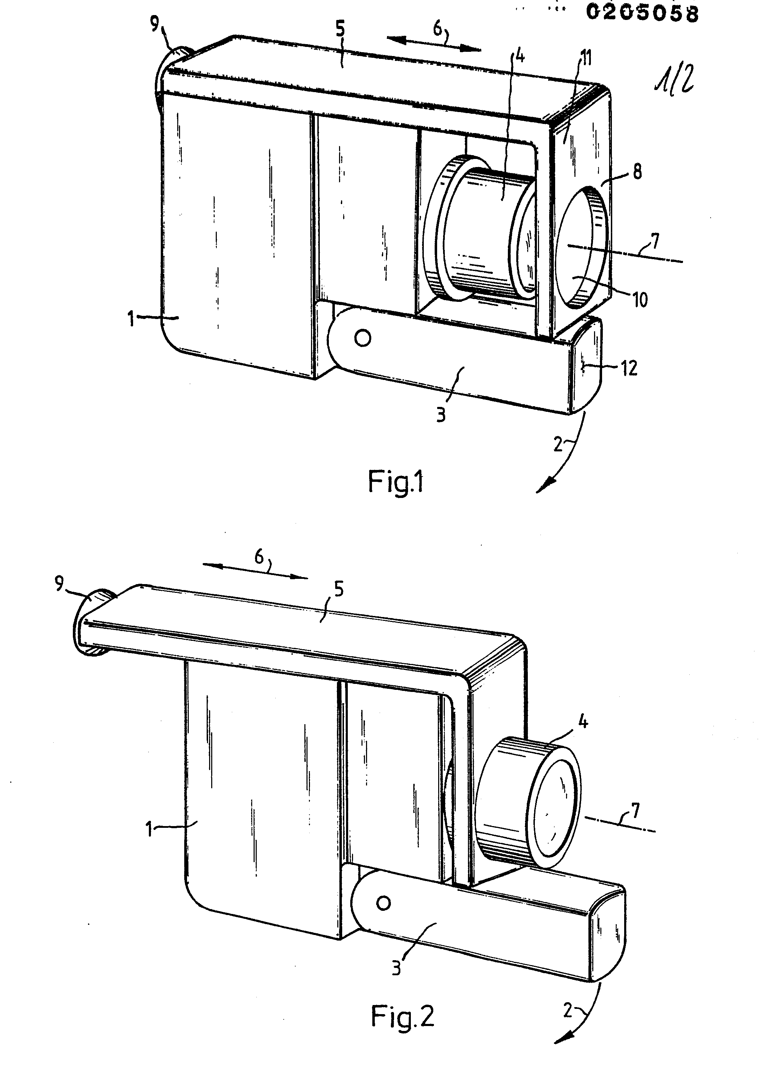

Fig. 1 zeigt eine Videokamera mit dem Gehäuse 1, dem in Richtung 2 herausklappbaren Tragegriff 3, dem Objektiv 4 und dem
das obere Gehäuseteil bildenden verschiebbaren Teil 5. Das verschiebbare Teil 5 ist durch eine Schwalbenschwanzführung in
Längsrichtung 7 zwischen zwei Endstellung verschiebbar gelagert.
Fig. 1 zeigt die vordere Endstellung des Teils 5. In dieser Endstellung
befindet sich ein senkrecht zur Objektivachse 7 stehender Ausleger 8 vor dem Objektiv 4. Dadurch wird ein Schutz für das
Objektiv 4 bewirkt, wenn z.B. die Kamera getragen, abgelegt oder zusammen mit anderen Gegenständen aufbewahrt oder transportiert
wird. Durch den Ausleger 8 vor dem Objektiv 4 wird weitestgehend verhindert, daß Fremdkörper auf das Objektiv einwirken
können. Die dargestellte Endstellung des Teiles 5 stellt also
die Ruhestellung der Kamera dar, die für den Aufnahmebetrieb
nicht vorgesehen ist. Am hinteren Ende des Teiles 5 befindet
sich das Okular 9 des Suchers, mit dem das Bild eines eingebauten Schwarz/Weiß-Monitors betrachtet werden kann. Der Ausleger
8 ist mit einer Öffnung 10 versehen, die etwas größer ist als
der maximale Durchmesser des Objektivs 4. Die Vorderfläche 11
des Auslegers 8 und die Fläche 12 des Griffes 3 bilden zusammen eine senkrecht zur Objektivachse 7 stehende Standfläche,
mit der die Kamera mit senkrecht stehender Objektivachse 7 auf einer Unterlage abgestellt werden kann.

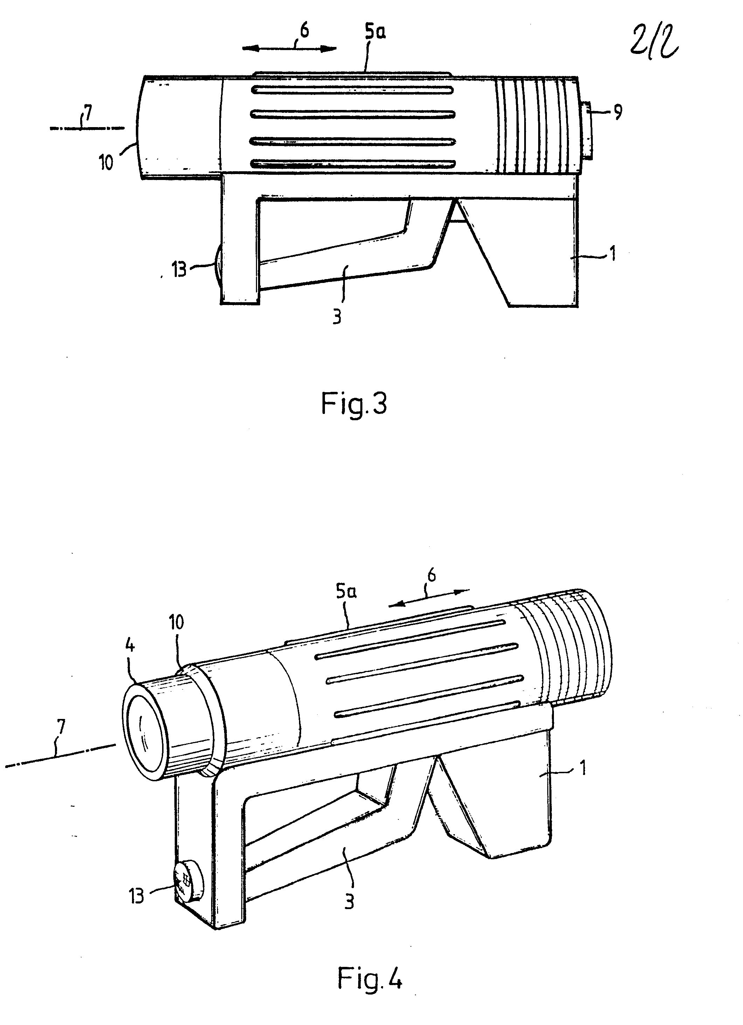

Fig. 2 zeigt die Kamera gemäß Fig. 1 in der hinteren Endstellung
des Teiles 5. Beim Verschiebevorgang kann das Objektiv 4 durch
die Öffnung 10 hindurchgleiten, so daß das gesamte Objektiv 4
freikommt. Das Objektiv 4 kann dann ohne Behinderung durch
das Teil 5 von Hand betätigt werden, insbesondere zur Einstellung von Entfernung, Blendenöffnung, Brennweite und Zoom-
Optik. Gleichzeitig ist das Okular 9 nach hinten ausgefahren.
Durch diesen Verschiebevorgang des Okulars 9 ist gleichzeitig
die wirksame Vergrößerung für den Sucher auf den Maximalwert
gestellt. Durch die Verschiebung des Teiles 5 von der Lage
gemäß Fig. 1 in die Lage gemäß Fig. 2 wird also der Betriebszustand der Kamera hergestellt, in dem das Objektiv freigegeben
und gleichzeitig der Sucher mit dem Okular 9 auf maximale Vergrößerung des Monitorbildes eingestellt sind.

Die beiden Endstellungen gemäß Fig. 1 und 2 sind vorzugsweise
als Raststellungen ausgebildet, da praktisch nur die beiden
Endstellungen von Bedeutung sind und Zwischenstellungen nicht
benötigt werden.

In Fig. 3 ist das verschiebbare Teil 5a hülsenförmig ausgebildet und umgibt koaxial das gesamte, im oberen Teil zylinderförmig ausgebildete Kameragehäuse 1. Die Abdeckung und der
Schutz für das Objektiv 4 sind dadurch erreicht, daß das vordere Ende des rohrförmigen Teils 5a das Objektiv 4 vollständig
umgibt. An der Vorderseite des Gehäuses 1 ist das Aufnahmemikrofon 13 angeordnet. Die Lagerung des Mikrofones 13 ist mit dem
verschiebbaren Teil 5a so gekoppelt, daß das Mikrofon 13 in
der hinteren Endstellung des Teils 5a selbsttätig nach vorne
ausgefahren wird. Dadurch entfällt das bei manchen Videokameras
erforderliche manuelle Herausziehen eines Mikrofones bei Aufnahmebetrieb. Am hinteren Ende des Gehäuses 1 sind alle Bedien-
und Anzeigeelemente angeordnet. So ist die Bedienung und Handhabung der Kamera für Rechts- und für Linkshänder gleichermaßen gut. Das Okular 9 des Suchers befindet sich wieder am
rückwärtigen Ende des Teils 5a.

Fig. 4 zeigt die Betriebsstellung der Kamera gemäß Fig. 3
mit dem Teil 5a in der hinteren Endstellung. Das Objektiv 4
ist für die manuelle Bedienung freigegeben. Das Okular 9
am rückwärtigen Ende ist wieder nach hinten ausgefahren, wodurch die maximale Vergrößerung des Suchers eingestellt ist.
Der Griff 3 ist in diesem Beispiel nicht schwenkbar, sondern
bildet einen festen Teil des Gehäuses 1. Am rückwärtigen Ende
des Griffes 3 ist noch ein Schalter zum Ein- und Ausschalten
des Aufnahmebetriebes untergebracht.

Die Verschiebung des verschiebbaren Teiles 5 in die hintere
Endstellung gemäß Fig. 2 oder 4, also die eigentliche Arbeitsstellung, kann auch durch Wirkung eines Kraftspeichers erfolgen.
Beispielsweise wird bei der Verschiebung in die vordere Endstellung gemäß Fig. 1,3 eine Feder gespannt und das Teil 5
rastet ein. Für die Verschiebung in die hintere Endstellung
wird ein Knopf betätigt, so daß die Feder selbsttätig und
schnell das Teil 5 in die hintere Endstellung zurückschiebt.
Durch diese Lösung kann die Handhabung weiter vereinfacht und
insbesondere die Zeit für die Inbetriebnahme der Kamera verkürzt werden. Das ist insbesondere bei sehr kurzfristig und
unerwartet auftretenden Objekten wie z.B. in der freien Natur
vorteilhaft.

Mit dem verschiebbaren Teil 5 können zusätzlich Schalter
gekuppelt sein, die in der vorderen Endstellung gemäß Fig. 1,3,
also der Ruhestellung, bestimmte Betriebsfunktionen selbsttätig abschalten und in der hinteren Endstellung selbsttätig
einschalten. Dadurch können zusätzliche Handhaben für die
Abschaltung bestimmter Funktionen eingespart und vermieden
werden, das die Abschaltung vergessen wird. Dadurch können Bauteile geschont oder Energie eingespart werden unabhängig davon, ob die Energieversorgung der Kamera von einem Recorder aus oder durch eingebaute Batterien erfolgt.

Deutsche AG für Unterhaltungselectronic OHG

Hannover,den 29.05.1985
PTL-Wp/hl     H 85/048

Patentansprüche

1. Videokamera mit einem Gehäuse (1), einem Objektiv (4) und
   einem Sucher (9) zum Betrachten des Bildausschnitts, dadurch
   gekennzeichnet, daß an dem Gehäuse (1) ein in Längsrichtung (6) der Kamera verschiebbares Teil (5) gelagert
   ist, das in der vorderen Endstellung (Fig. 1,3) einen
   Schutz für das Objektiv (4) bildet und in der hinteren
   Endstellung (Fig. 2,4) das Objektiv (4) freigibt.

2. Kamera nach Anspruch 1, dadurch gekennzeichnet, daß am
   hinteren Ende des verschiebbaren Teils (5) ein Okular (9)
   des Suchers angeordnet ist, das in der hinteren Endstellung
   (Fig. 3,4) des Teils (5) die maximale Vergrößerungswirkung
   für den Bildausschnitt bewirkt.

3. Kamera nach Anspruch 1, <u>dadurch gekennzeichnet</u>, daß das
   Teil (5) am vorderen Ende mit einem senkrecht zur Objektivachse (7) stehenden Ausleger (8) versehen ist, der eine
   Öffnung (10) zum Durchtritt des Objektivs (4) aufweist.

4. Kamera nach Anspruch 3, <u>dadurch gekennzeichnet</u>, daß die
   Vorderfläche (11) des Auslegers (8) als Standfläche zum
   Hinstellen der Kamera ausgebildet ist.

5. Kamera nach Anspruch 1, <u>dadurch gekennzeichnet</u>, daß das
   verschiebbare Teil (5) den oberen Teil des Gehäuses bildet.

6. Kamera nach Anspruch 1, <u>dadurch gekennzeichnet</u>, daß das
   verschiebbare Teil (5a) das zylinderförmige Gehäuse (1)
   hülsenartig ungibt (Fig. 3,4).

7. Kamera nach Anspruch 1, <u>dadurch gekennzeichnet</u>, daß an
   der Vorderseite des Gehäuses (1) ein Mikrofon (13) angeordnet und so mit dem verschiebbaren Teil (5) gekuppelt
   ist, daß es in der vorderen Endstellung des Teiles (5)
   nach voren ausgefahren ist.

8. Kamera nach Anspruch 1, <u>dadurch gekennzeichnet</u>, daß für
   die Verschiebung des verschiebbaren Teiles (5) in die
   hintere Endstellung ein Kraftspeicher vorgesehen ist.

9. Kamera nach Anspruch 8, <u>dadurch gekennzeichnet</u>, daß der
   Kraftspeicher durch eine Feder gebildet ist, die bei der
   Verschiebung des Teiles (5) in die vordere Endstellung gespannt wird und für eine selbsttätige Verschiebung des
   Teiles (5) in die hintere Endstellung auslösbar ist.

10. Kamera nach Anspruch 1, <u>dadurch gekennzeichnet</u>, daß mit
    dem verschiebbaren Teil (5) Schalter gekuppelt sind, die in
    der vorderen Endstellung eine selbsttätige Abschaltung
    und in der hinteren Endstellung eine selbsttäge Einschaltung von Betriebsfunktionen bewirken. verschiebbare Teil (5) den
oberen Teil des Gehäuses bildet.

Fig.1

Fig.2

Fig.3

Fig.4